# EUROPEAN PATENT APPLICATION

(11) **EP 2 487 637 A1**
(43) Date of publication of application: **15.08.2012**
(21) Application number: 09849006.3
(22) Date of filing: 07.09.2009
(51) Int. Cl.: G06Q 50/00

(54) **MEMBER MANAGEMENT SYSTEM, MEMBER MANAGEMENT DEVICE, AND PROGRAM**

(71) Applicant: Fujitsu Limited, Kawasaki-shi, Kanagawa 211-8588 (JP)
(72) Inventor: NAKAMURA, Fumito, Kawasaki-shi Kanagawa 211-8588 (JP)
(74) Representative: Stebbing, Timothy Charles
(86) International application number: PCT/JP2009/065608
(87) International publication number: WO 2011/027476

(57) **Abstract**

A member management system 1 including: a server unit 21 including: a device information collection unit 202 that collects from an attached member unique information of the attached member; a test implementation unit 204 that specifies the member with the unique information, and implements a given test; and a member information collection unit 201 that collects environment information of the given test, the environment information including the unique information and location information of the member; and a management unit 11 including: a member database 103 that associates unique information of a member, location information of the member and status information of the member with each other, and stores the unique information, the location information and the status information; and a member information management unit 101 that updates each information on the member stored into the database and being used for the given test, based on the environment information.

## Description

### FIELD

The present invention relates to a member management system, a member management apparatus and a program.

### BACKGROUND

Conventionally, there is known an article lending system that automatically manages the lending and the return of an article (e.g. see Patent Document 1). The article lending system includes: an article storing unit 13 that has a cover opening and closing sensor 15 detecting the conveyance of the article; and an article returning unit 16 that has a return management sensor 17 detecting the return of the article. When the article is conveyed from the article storing unit 13, the cover opening and closing sensor 15 operates, and a computer 12 is notified of the conveyance of the article. On the contrary, when the article is returned to the article returning unit 16, the return management sensor 17 operates, and the computer 12 is notified of the return of the article.

In addition, there is conventionally known a software test of a server unit. An operations management software and an OS (Operating System) are installed beforehand in the server unit. In the server unit, PCI (Peripheral Component Interconnect) cards and hard disks (hereinafter referred to as "member(s)") are connected. In the software test, the operations management software checks whether information can be normally acquired from the OS and the member. Then, the software test is repeatedly performed by changing the OS or changing the member to another member.

### PRIOR ART DOCUMENT

### PATENT DOCUMENT

Patent Document 1: Japanese Laid-Open Patent Publication No. 6-52190

### DISCLOSURE OF THE INVENTION

### PROBLEMS TO BE SOLVED BY THE INVENTION

In the software test, since changing the member is performed, it is required to manage the lending and the return of the member appropriately. When the lending and the return of the member is managed manually, data registration of the lending and the return may be forgotten, and hence there is a problem that the location of the member becomes unknown. Thereby, a user may be unable to construct a test environment smoothly.

In the above-mentioned article lending system, optical sensors are used as the cover opening and closing sensor 15 and the return management sensor 17. Therefore, the computer 12 cannot acquire unique information (e.g. serial number) of the article and identify the article. As a result, the above-mentioned article lending system cannot confirm whether the article has been used actually or the article used actually has been returned.

In view of the problem described above, it is an object in one aspect of the embodiment to provide a member management system, a member management apparatus and a program that can manage a status and a location of a member.

### MEANS FOR SOLVING THE PROBLEMS

In order to solve the above problem, a member management system disclosed herein includes: an information processing apparatus including: a first collection portion that collects from an attached member unique information of the attached member; an implementation portion that specifies the member with the unique information, and implements a given test; and a second collection portion that collects environment information of the given test, the environment information including the unique information and location information of the member; and a management apparatus including: a database that associates unique information of a member, location information of the member and status information of the member with each other, and stores the unique information, the location information and the status information; and an update portion that updates each information on the member stored into the database and being used for the given test, based on the environment information.

In addition, a member management apparatus disclosed herein includes: a database that associates unique information of a member, location information of the member and status information of the member with each other, and stores the unique information, the location information and the status information; a first collection portion that collects the location information of the member selected from the database; an implementation portion that specifies the member with the unique information, and implements a given test; a second collection portion that collects environment information of the given test, the environment information including the unique information and location information of the selected member; and an update portion that updates each information on the member stored into the database and being used for the given test, based on the environment information.

In addition, a program disclosed herein causes a computer having a database to act as the following portions, the database associating unique information of a member, location information of the member and status information of the member with each other, and storing the unique information, the location information and the status information, the following portions include; a first collection portion that collects the location information of the member selected from the database; an implementation portion that specifies the member with the unique information, and implements a given test; a second collection portion that collects environment information of the given test, the environment information including the unique information and location information of the selected member; and an update portion that updates each information on the member stored into the database and being used for the given test, based on the environment information.

### EFFECTS OF THE INVENTION

According to a member management system, a member management apparatus and a program disclosed herein, it is possible to manage a status and a location of a member.

### BRIEF DESCRIPTION OF DRAWINGS

FIG. 1 is a schematic diagram illustrating configuration of a member management system in accordance with a first embodiment;

FIG. 2 is a function block diagram of the member management system;

FIG. 3A is a diagram illustrating an example of a member database in which cards are registered as members;

FIG. 3B is a diagram illustrating an example of the member database in which hard disk are registered as the members;

FIG. 4 is a flowchart illustrating a process when a user reserves a Disk 1 of FIG. 3B;

FIG. 5 is a diagram illustrating an example of the member database after reservation;

FIG. 6 is a flowchart illustrating a process before the implementation of a software test;

FIG. 7 is a diagram illustrating an example of the member database before the implementation of the software test;

FIG. 8 is a flowchart illustrating a process during the implementation of the software test;

FIG. 9 is a diagram illustrating an example of the member database during the implementation of the software test;

FIG. 10 is a flowchart illustrating a process after the implementation of the software test;

FIG. 11 is a diagram illustrating an example of the member database after the implementation of the software test;

FIG. 12 is a function block diagram of the member management system in accordance with a second embodiment;

FIG. 13 is a diagram illustrating an example of displaying the member database; and

FIG. 14 is a diagram illustrating states of partitions.

### DESCRIPTION OF EMBODIMENTS

A description will be given of embodiments of the invention, with reference to drawings.

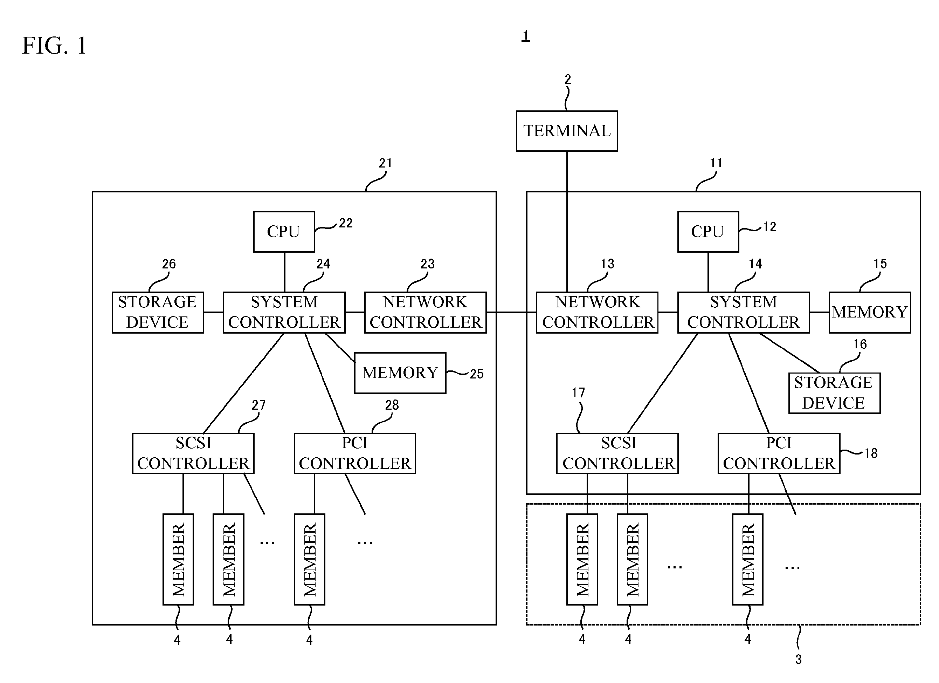

(EMBODIMENT 1) FIG. 1 is a schematic diagram illustrating configuration of a member management system in accordance with a first embodiment.

In FIG. 1, a member management system 1 includes a terminal 2, an I/O unit 3, a management unit 11 (a management apparatus), and a server unit 21 (a information processing apparatus). The terminal 2 is a computer which a user uses, and includes a monitor displaying information. In addition, the terminal 2 is connected to the management unit 11.

The I/O unit 3 is connected to the management unit 11, and includes a plurality of members 4. The member 4 is a PCI (Peripheral Component Interconnect) card, a SCSI (Small Computer System Interface) card, a hard disk, or the like.

The management unit 11 is a server that manages the server unit 21. The server unit 21 is a server that implements a software test. In the present system, a single server unit is described, but the present system may include a plurality of server units. In this case, the plurality of server units are connected to the management unit 11.

The management unit 11 includes: a CPU (Central Processing Unit) 12 that controls the entire management unit 11; a network controller 13 that is connected to the terminal 2 and the server unit 21; and a system controller 14 that controls transmission and reception of information. In addition, the management unit 11 includes: a memory 15 that stores a member database and various information; and a storage device 16 that stores information. Moreover, the management unit 11 includes: a SCSI controller 17 that is connected to the member 4 and reads out unique information such as a device ID, a vender ID or a serial ID of the member 4; and a PCI controller 18. The system controller 14 is connected to the CPU 12, the network controller 13, the memory 15, the storage device 16, the SCSI controller 17, and the PCI controller 18.

The server unit 21 includes: a CPU 22 that controls the entire server unit 21; a network controller 23 that is connected to the management unit 11; and a system controller 24 that controls transmission and reception of information. In addition, the server unit 21 includes: a memory 25 that stores operations management software, an OS (Operating System), and various information; and a storage device 26 that stores various information. Here, the operations management software and the OS may be stored in the storage device 26. Moreover, the server unit 21 includes: a SCSI controller 27 that is connected to the member 4 and reads out unique information such as a device ID, a vender ID or a serial ID of the member 4; and a PCI controller 28. The member 4 removed from the I/O unit 3 is attached to the server unit 21. The system controller 24 is connected to the CPU 22, the network controller 23, the memory 25, the storage device 26, the SCSI controller 27, and the PCI controller 28.

The CPU 22 runs the operations management software, and checks whether the operations management software can normally acquire information from the OS and the member 4. Thus, a test confirming whether the operations management software can normally acquire information from the OS and the member 4 is the software test. The software test is repeatedly implemented by changing the OS in the server unit 21 or changing the member 4 in the server unit 21 to another member 4.

Although the storage device 16 is included in the management unit 11 in the example of FIG. 1, a storage device may be connected to the management unit 11 from the outside. In addition, the member 4 may be attached to the management unit 11.
In this case, a connector for attaching the member 4 is necessary for the management unit 11.

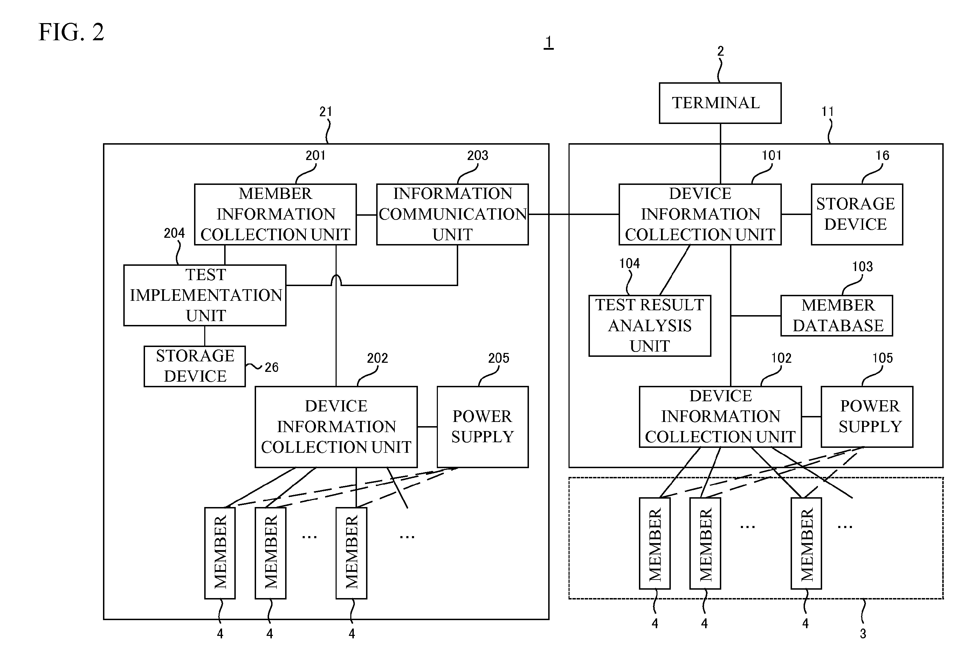

FIG. 2 is a function block diagram of the member management system. Components identical to those in FIG. 1 are designated by identical reference numbers.

The management unit 11 includes a member information management unit 101 (a update portion), a device information collection unit 102, a member database 103, a test result analysis unit 104, a power supply 105, and the storage device 16. On the contrary, the server unit 21 includes a member information collection unit 201 (a second collection portion), a device information collection unit 202 (a first collection portion), an information communication unit 203, a test implementation unit 204 (an implementation portion), a power supply 205, and the storage device 26. The member information management unit 101 is connected to the device information collection unit 102, the member database 103, the test result analysis unit 104, and the storage device 16. The member information collection unit 201 is connected to the device information collection unit 202, the information communication unit 203, and the test implementation unit 204. The test implementation unit 204 is connected to the information communication unit 203. The power supply 105 is connected to the device information collection unit 102, and the power supply 205 is connected to the device information collection unit 202.

Functions of the member information management unit 101 and the test result analysis unit 104 are achieved by the CPU 12. A function of the device information collection unit 102 is achieved by the SCSI controller 17 and the PCI controller 18. The member database 103 is stored into the memory 15 or the storage device 16. Functions of the member information collection unit 201 and the test implementation unit 204 are achieved by the CPU 22. A function of the device information collection unit 202 is achieved by the SCSI controller 27 and the PCI controller 28. A function of the information communication unit 203 is achieved by the network controller 23.

The member information management unit 101 acquires unique information of the member 4 from the device information collection unit 102, and generates and updates the member database 103. Also, when the member information management unit 101 receives an information display request from the terminal 2, the member information management unit 101 transmits information corresponding to the request to the terminal 2. The member information management unit 101 transmits a test result of the software test to the test result analysis unit 104, receives a result of analysis of the test result from the test result analysis unit 104, and registers the result of analysis of the test result into the member database 103.

The device information collection unit 102 acquires unique information of the member 4, and transmits the unique information of the member 4 to the member information management unit 101. The test result analysis unit 104 receives the test result of the software test, and judges whether the test result is OK or NG. The result of the judgment, i.e., the result of the analysis is transmitted to the member information management unit 101.

The device information collection unit 202 acquires unique information of the member 4, and transmits the unique information of the member 4 to the member information collection unit 201. The member information collection unit 201 acquires the unique information of the member 4 from the device information collection unit 202, and transmits the unique information of the member 4 to the test implementation unit 204. The test implementation unit 204 specifies the member with the unique information of the member 4, implements the software test, and transmits the test result to the management unit 11 via the information communication unit 203.

When a user uses the member 4, the user accesses the management unit 11 from the terminal 2. At this time, the member information management unit 101 acquires a power distribution status and the unique information of the member 4 connected to the device information collection unit 102, using an IPMI (Intelligent Platform Management Interface) and an I/O driver. The member information management unit 101 updates the member database 103 by using the acquired power distribution status and the acquired unique inf`ormation of the member 4, and causes the terminal 2 to display the database 103 in the form of HTML.

The member information management unit 101 manages the member database 103. When a PCI card is registered into the member database 103 as a new member 4, the device information collection unit 102 collects unique information such as a vender ID and a serial ID from the PCI card, and transmits the unique information to the member information management unit 101. The member information management unit 101 receives the unique information, and updates the member database 103.

Similarly, when a hard disk is registered into the member database 103 as a new member 4, the device information collection unit 102 collects identification information of the OS, and unique information such as a device ID and a serial ID from the hard disk, and transmits the identification information and the unique information to the member information management unit 101. The member information management unit 101 receives the identification information of the OS and the unique information, and updates the member database 103.

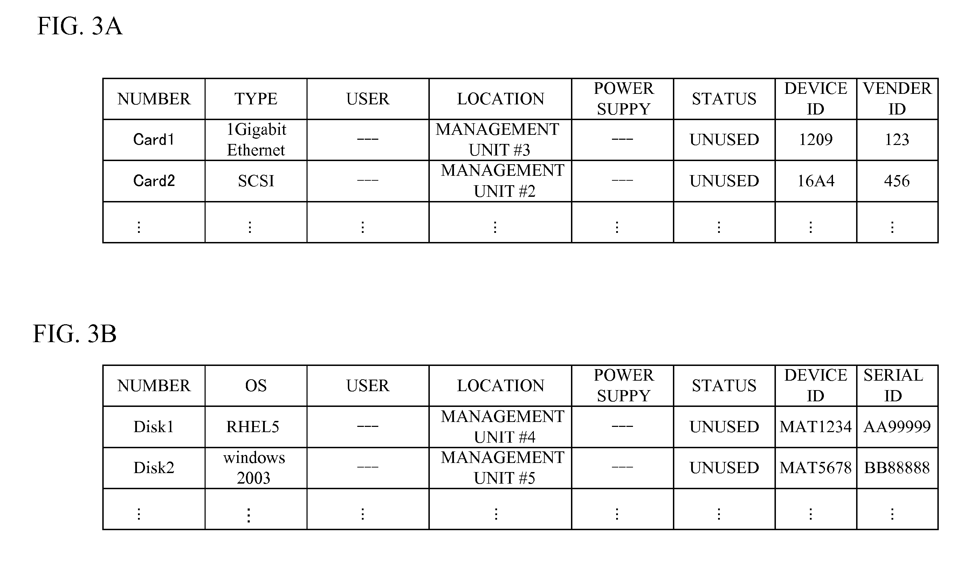

FIG. 3A is a diagram illustrating an example of the member database 103 in which cards are registered as the members 4. FIG. 3B is a diagram illustrating an example of the member database 103 in which hard disks are registered as the members 4.

In a column of "Number" of FIG. 3A, a number is given to each card in registered order. The type of each card is registered into a column of "Type", and the number of a slot into which each card is inserted is registered into a column of "Location". Also, a use status of each card registered into the member database 103 is registered into a column of "Status". In the case of FIG. 3A, it is assumed that each card is in an unused status, and hence a character "unused" is registered into the column of "Status". A device ID and a vender ID acquired from the unique information of each card are registered into columns of "Device ID" and "Vender ID", respectively. A name of a card user input from the terminal 2 is registered into a column of "User". A status of the power supply 205 is registered into a column of "Power Supply".

In a column of "Number" of FIG. 3B, a number is given to each hard disk in registered order. The type of an OS stored into each hard disk is registered into a column of "OS", and the number of a slot to which each hard disk is connected is registered into a column of "Location". Also, a use status of each hard disk is registered into a column of "Status". In the case of FIG. 3B, a character "unused" is registered. A device ID and a vender ID acquired from the unique information of each hard disk are registered into columns of "Device ID" and "Vender ID", respectively. A name of a user of each hard disk input from the terminal 2 is registered into a column of "User". A status of the power supply 205 is registered into a column of "Power Supply".

Thus, in the member database 103, the registered order of the member 4, the type of the member 4 or the OS, the name of the user, ON/OFF of the power supply 205, the location of the member 4, the status of the member 4, and the unique information of the member 4 are associated with each other, and are stored.

Here, a user can use the member in which the character "unused" is registered into the column of "Status", as illustrated in FIGs. 3A and 3B.

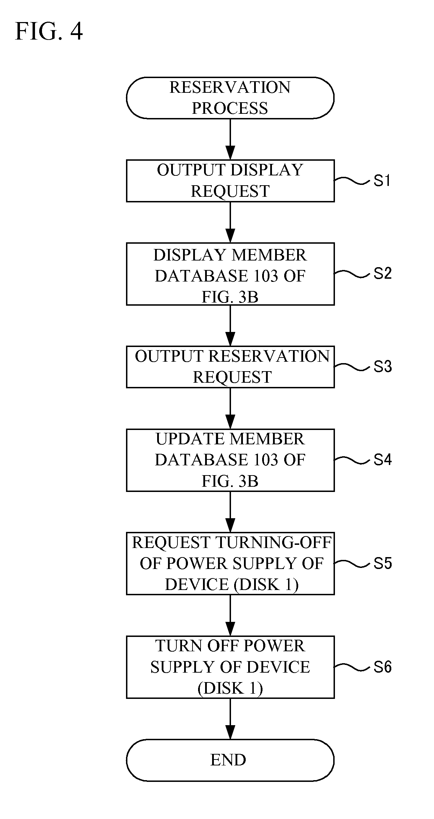

FIG. 4 is a flowchart illustrating a process when a user reserves the use of a Disk 1 of FIG. 3B. Here, although the Disk 1 is used as an example of the member 4, the present process is also applicable to another member.

First, the terminal 2 outputs a display request of the member database 103 of FIG. 3B to the member information management unit 101 in response to the user's operation (step S1). The member information management unit 101 reads out the member database 103 of FIG. 3B, transmits the member database 103 to the terminal 2, and display the member database 103 on the terminal 2 (step S2). Next, the terminal 2 outputs a reservation request of the member to the member information management unit 101 in response to the user's operation (step S3). Here, the reservation request is that a user requests a use reservation of the member registered into the member database 103, i.e., specifically, to write a name into the column of "User" corresponding to the Disk 1 of FIG. 3B. At the time of reservation request, the name of the user which requests the reservation is input from the terminal 2 and output to the member information management unit 101.

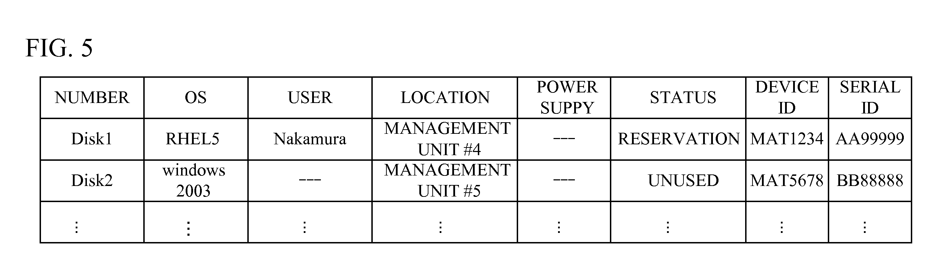

The member information management unit 101 updates the columns of "Status" and "User" of the member database 103 of FIG. 3B (step S4). In this case, information indicative of "use" and the user's name are written in the columns of "Status" and "User", respectively. Next, the member information management unit 101 requests the device information collection unit 102 to turn off the power supply of the reserved member 4 (Disk 1) (step S5). The device information collection unit 102 turns off the power supply of the reserved member 4 (Disk 1) (step S6), and the present process is terminated. According to step S6, the member 4 (Disk1) can be removed safely from the I/O unit 3, and breakage of the member 4 (Disk1) in the case of removal can be avoided. The member database 103 of FIG. 3B after the reservation is illustrated by FIG. 5.

According to the reservation process, the user can confirm whether a certain member 4 in the member database 103 is the reserved member 4. In addition, it is possible to manage a status of the reservation with the member database 103.

When the reservation process is completed, the user removes the member 4 (Disk 1) from the I/O unit 3 and attaches the member 4 (Disk 1) to the server unit 21. Then, the software test is implemented.

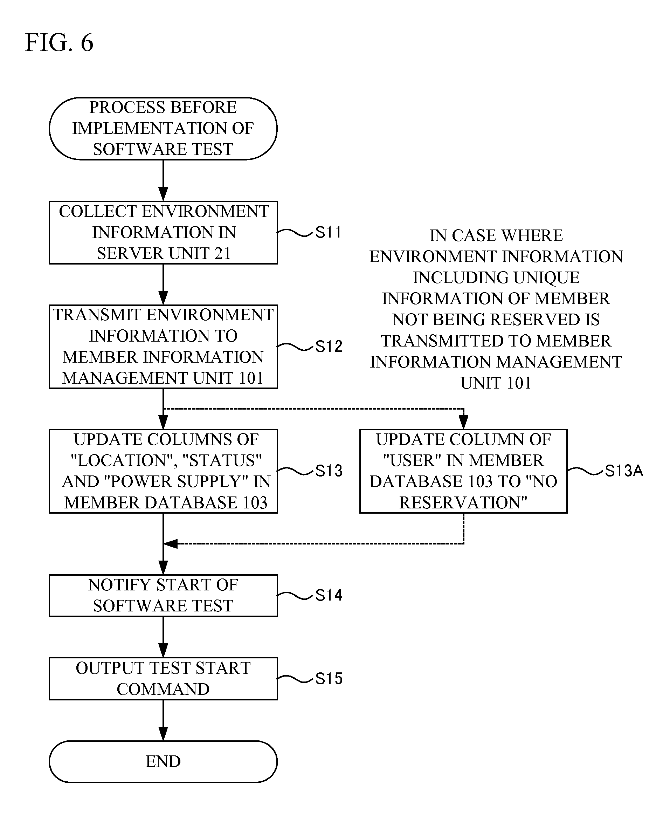

FIG. 6 is a flowchart illustrating a process before the implementation of the software test.

First, the member information collection unit 201 collects environment information in the server unit 21 (step S11). Location information of the member 4, i.e., information of the slot to which the member is connected, information of the OS when the test is implemented, hardware information when the test is implemented, the unique information of the member 4 acquired from the device information collection unit 202, and so on are included in the environment information.

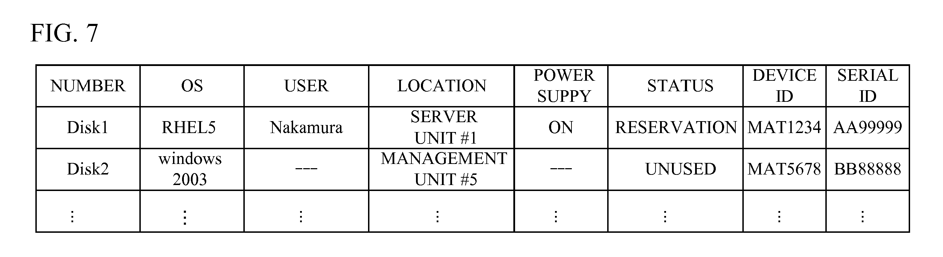

In addition, the member information collection unit 201 transmits the environment information to the member information management unit 101 of the management unit 11 via the information communication unit 203 (step S12). The member information management unit 101 compares the unique information of the member 4 included in the environment information with the member database 103, and updates the columns of "Location", "Status" and "Power Supply" of the corresponding member 4 in the member database 103 (step S 13). Here, the member database 103 of FIG. 3B before the implementation of the software test is illustrated by FIG. 7. Compared to FIG. 5, the column of "Location" is changed from "management unit #4" to "server unit #1", the column of "Status" is changed from "reservation" to "in-use", and the column of "Power Supply" is changed from "-" to "ON".

The member information management unit 101 notifies the server unit 21 of the start of the software test via the network (step S14). The information communication unit 203 receives the notification from the member information management unit 101, and outputs a test start command to the test implementation unit 204 (step S15). Thereby, the software test is started.

When the environment information including the unique information of the member not being reserved is transmitted to the member information management unit 101 in step S11, the member information management unit 101 updates the column of "User" of the corresponding member 4 (Disk 1) to "No Reservation", i.e., warning information (step S 13A). Thereby, warning can be given to the user. In this case, the software test itself is implemented.

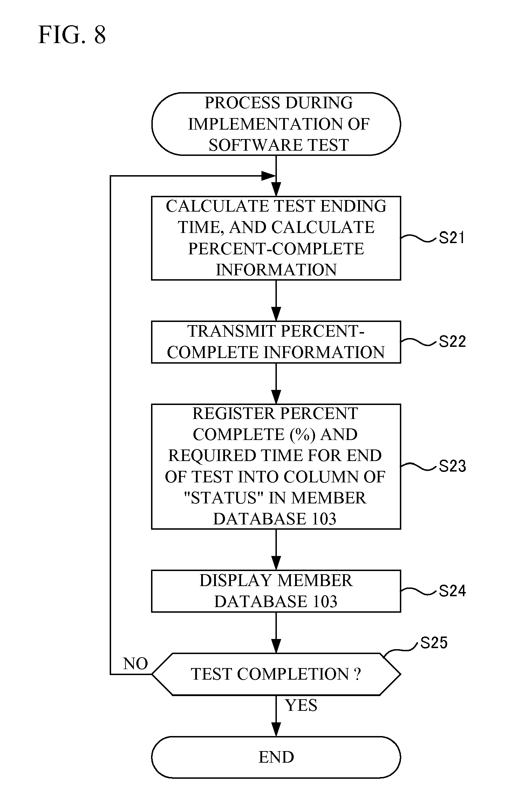

FIG. 8 is a flowchart illustrating a process during the implementation of the software test.

The test implementation unit 204 calculates a test ending time from the progress of the software test, and calculates percent-complete information on the software test continuously (step S21). The percent-complete information includes the percent complete (%) of the software test, and a required time for the end of the test. The information communication unit 203 continuously transmits the percent-complete information to the member information management unit 101 (step S22).

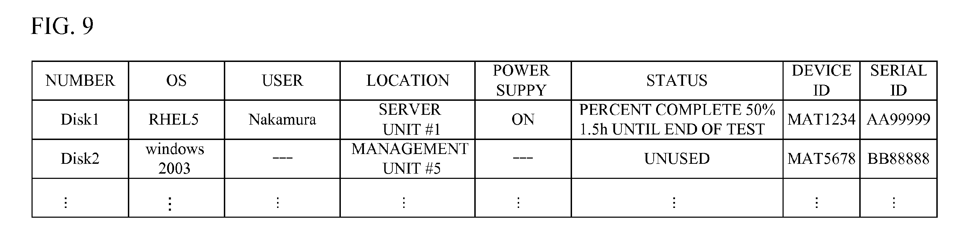

The member information management unit 101 receives the percent-complete information, and registers the percent complete (%) and the required time for the end of the test into the column of "Status" of the corresponding member 4 in the member database 103 (step S23). For example, in an example of the member database 103 of FIG. 9, percent complete 50% and 1.5h until the end of the test are registered into the column of "Status" of the member 4 (Disk 1).

The member information management unit 101 displays the updated member database 103 on the terminal 2 (step S24). The process of step S21 to S24 is implemented repeatedly until the software test is completed (step S25).

According to the present process, the user can confirms the percent complete of the software test and the ending time of the software test, and hence the member 4 can be utilized efficiently. In addition, the user can confirm the percent complete of the software test and the ending time of the software test which are continuously updated. Moreover, the member database 103 can manage the percent complete of the software test and the ending time of the software test.

The test implementation unit 204 may store the environment information and test implementation time relating to the software test into the storage device 26. Thereby, the test implementation unit 204 can calculate the test ending time more accurately, based on the progress of the software test, and the environment information and the test implementation time relating to the past software test.

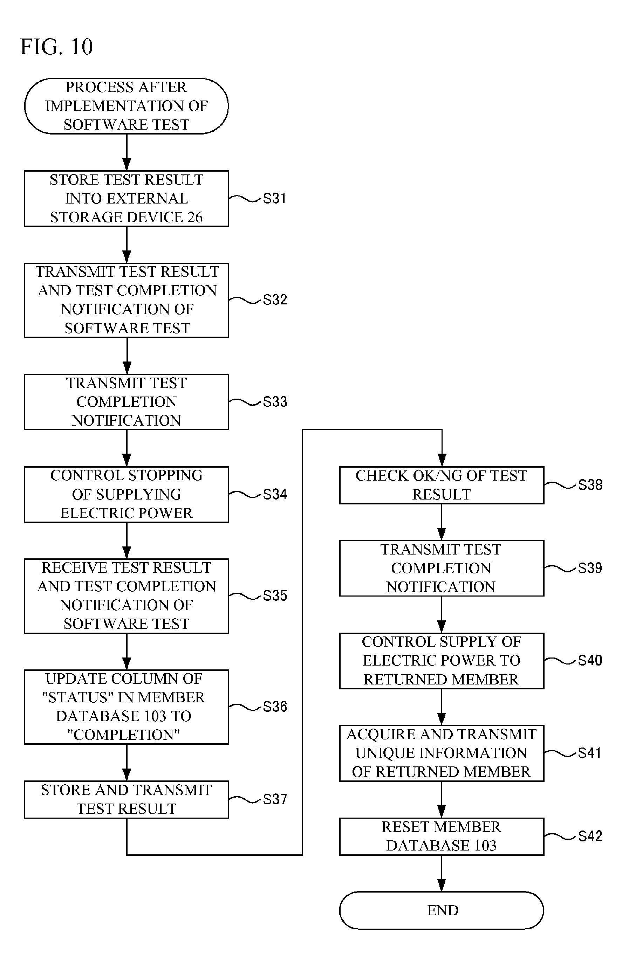

FIG. 10 is a flowchart illustrating a process after the implementation of the software test.

The test implementation unit 204 stores a test result of the software test into the storage device 26 (step S31). Then, the test implementation unit 204 transmits the test result and a test completion notification of the software test to the member information management unit 101 via the member information collection unit 201 and the information communication unit 203 (step S32).

When the member information collection unit 201 receives the test result and the test completion notification of the software test, the member information collection unit 201 transmits the test completion notification to the device information collection unit 202 (step S33). The device information collection unit 202 controls the power supply 205 so as to stop supplying an electric power to the member 4 (Disk 1) (step S34). Thereby, the user can remove the member 4 from the server unit 21 and return the member 4 to the I/O unit 3. In addition, breakage of the member 4 (Disk1) in the case of removal can be avoided.

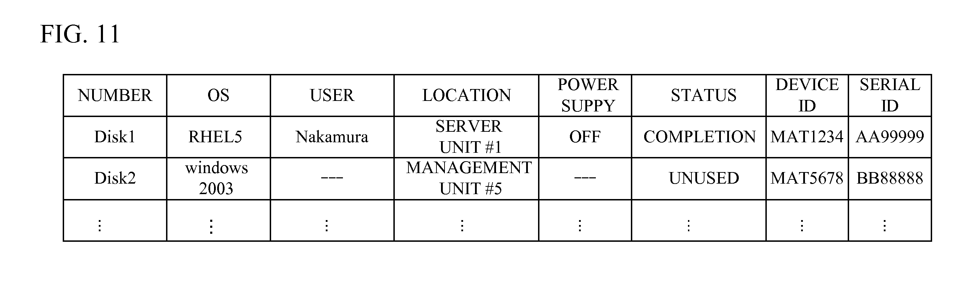

The member information management unit 101 receives the test result and the test completion notification of the software test (step S35), and updates the column of "Status" of the corresponding member 4 (Disk 1) in the member database 103 to "completion" (step S36). An example of the member database 103 after the completion of the test is illustrated by FIG. 11.

The member information management unit 101 further stores the test result of the software test into the storage device 16, and transmits the test result of the software test to the test result analysis unit 104 (step S37). The test result analysis unit 104 automatically checks whether the test result is OK or NG, and stores a result of the check into the storage device 16 (step S38).

In addition, the member information management unit 101 transmits the test completion notification to the device information collection unit 102 (step S39). When the member 4 (Disk 1) is returned to the I/O unit 3, the device information collection unit 102 controls the power supply 105 so as to supply an electric power to the member 4 (Disk 1) (step S40). Thereby, the unique information of the member 4 (Disk 1) can be acquired.

Then, the device information collection unit 102 acquires the unique information from the returned member 4 (Disk 1), and transmits the unique information to the member information management unit 101 (step S41). The member information management unit 101 compares the unique information of the returned member 4 (Disk 1) with the member database 103, and resets the columns of the member 4 (Disk 1) in the member database 103 to an initial state (e.g. the state of FIG. 3) (step S42). The present process is terminated.

According to the present process, even when the member 4 (Disk 1) is not returned to the I/O unit 3, for example, a use history (especially information on the location) remains in the member database 103. Therefore, the user can easily find an unreturned member 4.

According to the present embodiment, the device information collection unit 202 collects, from an attached member, unique information of the attached member. The test implementation unit 204 specifies the member with the unique information, and implements the software test. The member information collection unit 201 collects the environment information including the unique information and the location information of the member. Then, the member information management unit 101 updates the unique information, the location information and the status information on the member stored into the member database 103 and being used for the software test, based on the environment information. Therefore, it is possible to manage the status and the location of the member.

(EMBODIMENT 2) The present embodiment is different from the first embodiment in that the management unit 11 implements the software test and the server unit 21 is unnecessary. Here, component elements corresponding to those in the first embodiment are designated by identical reference numerals.

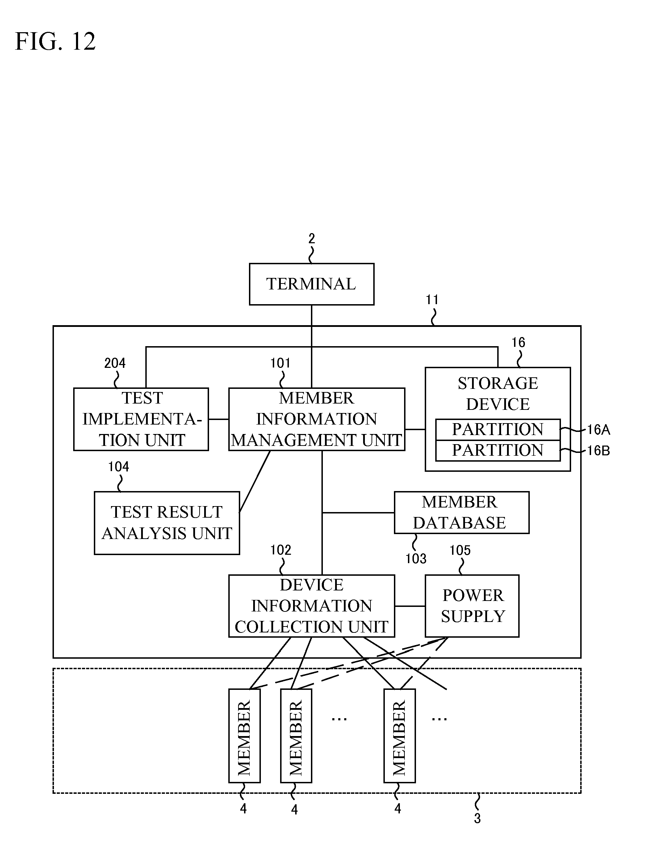

FIG. 12 is a function block diagram of the member management system in accordance with a second embodiment.

The member management system of the second embodiment includes the terminal 2, the management unit 11, and the I/O unit 3. The management unit 11 includes: the member information management unit 101 (an update portion and a second collection portion); the device information collection unit 102 (a first collection portion); the member database 103; the test result analysis unit 104; the storage device 16; the power supply 105; and the test implementation unit 204 (an implementation portion). The member information management unit 101 is connected to the device information collection unit 102, the member database 103, the test result analysis unit 104, the test implementation unit 204, and the storage device 16. The power supply 105 is connected to the device information collection unit 102.

The functions of the member information management unit 101, the test result analysis unit 104 and the test implementation unit 204 are achieved by the CPU 12 of FIG. 1. The function of the device information collection unit 102 is achieved by the SCSI controller 17 and the PCI controller 18 of FIG. 1. The member database 103 is stored into the memory 15 or the storage device 16 of FIG. 1. The storage device 16 includes partitions 16A and 16B for software tests.

In the member management system of FIG. 12, the user does not need to remove the member 4 from the I/O unit 3, and the test implementation unit 204 implements the software test using the partition 16A or 16B for the software test. For example, the unique information (e.g. a device ID, a vender ID, a serial ID and so on) of the member 4 is read out by the device information collection unit 102, and stored into the partition 16A by the member information management unit 101. The test implementation unit 204 specifies a member with the unique information of the member 4 stored into the partition 16A, and implements the software test.

Thus, the user can cause the management unit 11 to implement the software test without getting away from the terminal 2.

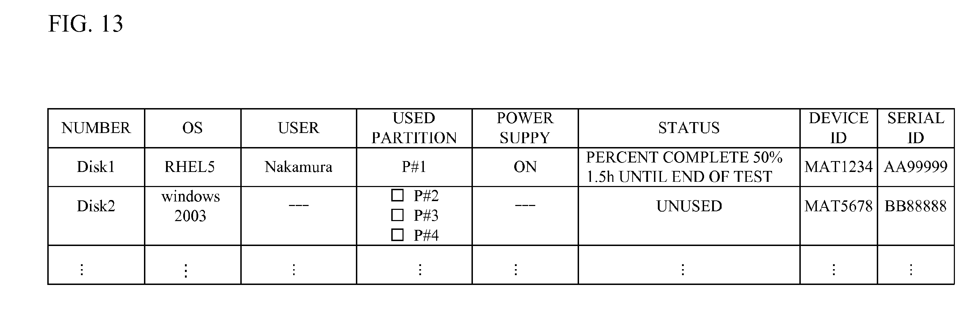

To use the member management system, the terminal 2 outputs a display request of the member database 103 to the member information management unit 101. The member information management unit 101 reads out the member database 103, and displays the member database 103 on the terminal 2. For example, an example of display of the member database 103 is illustrated by FIG. 13.

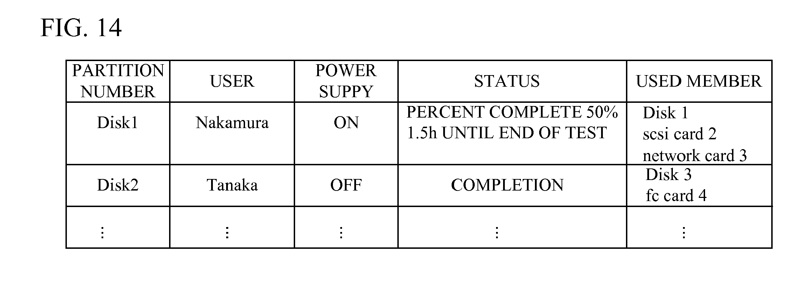

Then, the user selects a required member 4 and a partition to be used, on the terminal. The status of the partitions is displayed as illustrated in FIG. 14, for example.

Then, when the user inputs the test start command, the test implementation unit 204 implements the software test. The percent-complete information of the software test is continuously transmitted to the member information management unit 101, as is the case with the first embodiment. The member information management unit 101 continuously updates the member database 103 based on the percent-complete information.

When the software test is completed, the test result is stored into the storage device 16, and the test result analysis unit 104 checks whether the test result is OK or NG. Also, after the completion of the test, the member information management unit 101 resets the columns in the member database 103 corresponding to the member 4 in which the test has completed, to the initial state.

The reservation process of FIG. 4, the process before the implementation of the software test of FIG. 6, the process during the implementation of the software test of FIG. 8, and the process after the implementation of the software test of FIG. 10 are also implemented by the management unit 11 of the second embodiment. In these processes, the steps which the device information collection unit 202 implements are implemented by the device information collection unit 102, and the steps which the member information collection unit 201 implements are implemented by the member information management unit 101. Then, in these processes, the step in which information is transmitted from the server unit 21 to the management unit 11 and the step of controlling the power supply relating to removal of the member 4 are not implemented. This is because all steps are implemented by the management unit 11.

According to the present embodiment, the device information collection unit 102 collects from the attached member the unique information of the attached member. The test implementation unit 204 specifies the member with the unique information, and implements the software test. Then, the member information management unit 101 collects the environment information including the unique information and the location information of the member, and updates the unique information, the location information and the status information on the member stored into the member database 103 and being used for the software test, based on the environment information. Therefore, it is possible to manage the status and the location of the member.

A recording medium on which the software program for realizing the functions of the management unit 11 and/or the server unit 21 is recorded may be supplied to the management unit 11 and/or the server unit 21, and the CPU may read and execute the program recorded on the recording medium. In this manner, the same effects as those of the above-described first and the above-described second embodiments can be achieved. The recording medium for providing the program may be a CD-ROM (Compact Disk Read Only Memory), a DVD (Digital Versatile Disk), or a SD (Secure Digital) memory card, for example.

Alternatively, the CPU of the management unit 11 and/or the server unit 21 may execute a software program for realizing the functions of the management unit 11 and/or the server unit 21, so as to achieve the same effects as those of the above-described first and the above-described second embodiments.

### EXPLANATION OF REFERENCES

- 1: member management system
- 2: terminal
- 3: I/O unit
- 4: member
- 11: management unit
- 21: server unit
- 101: member information management unit
- 102: device information collection unit
- 103: member database
- 104: test result analysis unit
- 105: power supply
- 201: member information collection unit
- 202: device information collection unit
- 203: information communication unit
- 204: test implementation unit
- 205: power supply

## Claims

1. A member management system **characterized by** comprising:
an information processing apparatus including:
a first collection portion that collects from an attached member unique information of the attached member;
an implementation portion that specifies the member with the unique information, and implements a given test; and
a second collection portion that collects environment information of the given test, the environment information including the unique information and location information of the member; and
a management apparatus including:
a database that associates unique information of a member, location information of the member and status information of the member with each other, and stores the unique information, the location information and the status information; and
an update portion that updates each information on the member stored into the database and being used for the given test, based on the environment information.

2. The member management system as claimed in claim 1, **characterized in that** the implementation portion calculates a test ending time from the progress of the given test, and calculates percent-complete information including the percent complete of the given test and a required time for the end of the test, and
the update portion registers the percent complete and the required time for the end of the test included in the percent-complete information into the database as the status information of the member being used for the given test.

3. The member management system as claimed in claim 2, **characterized in that** during the implementation of the given test, the implementation portion continuously calculates the percent-complete information, and the update portion continuously updates the percent complete and the required time for the end of the test registered into the database.

4. The member management system as claimed in claim 3, **characterized in that** the information processing apparatus includes a storage device that stores environment information and implementation time of a past test, and
the implementation portion calculates the test ending time based on the progress of the given test, and the environment information and the implementation time stored into the storage device.

5. The member management system as claimed in any one of claims 1 to 4, **characterized in that** the management apparatus includes a third collection portion that collects unique information of a member attached to the management apparatus,
when a member attached to the information processing apparatus is returned, the third collection portion collects the unique information of the returned member, and
the update portion updates each information on the returned member stored into the database, based on the unique information of the returned member.

6. The member management system as claimed in claim 5, **characterized in that** each of the information processing apparatus and the management apparatus includes a power supply that supplies an electric power to an attached member,
when the attached member is removed, each of the first collection portion and the third collection portion controls the power supply so as to stop supplying the electric power, and
when a member is attached, each of the first collection portion and the third collection portion controls the power supply so as to supply the electric power.

7. The member management system as claimed in any one of claims 1 to 6, **characterized in that** the database further stores user's information of a member to be attached to the information processing apparatus, and
when the member to be attached to the information processing apparatus is reserved, the update portion updates the user's information and the status information of the reserved member in the database.

8. The member management system as claimed in claim 5, **characterized in that** when the member to be attached to the information processing apparatus is not reserved, the update portion updates the user's information in the database to warning information.

9. A member management apparatus **characterized by** comprising:
a database that associates unique information of a member, location information of the member and status information of the member with each other, and stores the unique information, the location information and the status information;
a first collection portion that collects the location information of the member selected from the database;
an implementation portion that specifies the member with the unique information, and implements a given test;
a second collection portion that collects environment information of the given test, the environment information including the unique information and location information of the selected member; and
an update portion that updates each information on the member stored into the database and being used for the given test, based on the environment information.

10. The member management apparatus as claimed in claim 9, **characterized in that** the implementation portion calculates a test ending time from the progress of the given test, and calculates percent-complete information including the percent complete of the given test and a required time for the end of the test, and
the update portion registers the percent complete and the required time for the end of the test included in the percent-complete information into the database as the status information of the member being used for the given test.

11. The member management apparatus as claimed in claim 10, **characterized in that** during the implementation of the given test, the implementation portion continuously calculates the percent-complete information, and the update portion continuously updates the percent complete and the required time for the end of the test registered into the database.

12. The member management apparatus as claimed in claim 11, **characterized in that** the information processing apparatus includes a storage device that stores environment information and implementation time of a past test, and
the implementation portion calculates the test ending time based on the progress of the given test, and the environment information and the implementation time stored into the storage device.

13. The member management apparatus as claimed in any one of claims 9 to 12, **characterized in that** the database further stores user's information of a member to be attached to the information processing apparatus, and
when the member to be attached to the information processing apparatus is reserved, the update portion updates the user's information and the status information of the reserved member in the database.

14. The member management apparatus as claimed in claim 13, **characterized in that** when the member to be attached to the information processing apparatus is not reserved, the update portion updates the user's information in the database to warning information.

15. A program that causes a computer having a database to act as the following portions, the database associating unique information of a member, location information of the member and status information of the member with each other, and storing the unique information, the location information and the status information, the following portions comprising;
a first collection portion that collects the location information of the member selected from the database;
an implementation portion that specifies the member with the unique information, and implements a given test;
a second collection portion that collects environment information of the given test, the environment information including the unique information and location information of the selected member; and
an update portion that updates each information on the member stored into the database and being used for the given test, based on the environment information.
